(19) Europäisches Patentamt / European Patent Office / Office européen des brevets

(11) **EP 3 453 986 B1**

(12) **EUROPEAN PATENT SPECIFICATION**

(45) Date of publication and mention
of the grant of the patent:
**08.07.2020 Bulletin 2020/28**

(51) Int Cl.:
*F25B 1/10* (2006.01)     *F25B 1/00* (2006.01)
*F25B 49/02* (2006.01)    *F25B 13/00* (2006.01)

(21) Application number: **17837037.5**

(22) Date of filing: **02.08.2017**

(86) International application number:
**PCT/JP2017/028135**

(87) International publication number:
**WO 2018/025935 (08.02.2018 Gazette 2018/06)**

(54) **HEAT PUMP DEVICE AND CONTROL METHOD THEREFOR**

HEIZPUMPVORRICHTUNG UND STEUERUNGSVERFAHREN DAFÜR

DISPOSITIF DE POMPE À CHALEUR ET PROCÉDÉ DE COMMANDE ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.08.2016 JP 2016154439**

(43) Date of publication of application:
**13.03.2019 Bulletin 2019/11**

(73) Proprietors:
• **Mitsubishi Heavy Industries Thermal Systems,
Ltd.
Tokyo 108-8215 (JP)**
• **Chubu Electric Power Co., Inc.
Nagoya-shi
Aichi 461-8680 (JP)**

(72) Inventors:
• **MAENO, Masashi
Tokyo 108-8215 (JP)**
• **WATANABE, Choyu
Nagoya-shi
Aichi 461-8680 (JP)**
• **NAKAYAMA, Hiroshi
Nagoya-shi
Aichi 461-8680 (JP)**

(74) Representative: **Cabinet Beau de Loménie
158, rue de l'Université
75340 Paris Cedex 07 (FR)**

(56) References cited:
EP-A1- 2 594 866      EP-A2- 3 018 351
JP-A- H0 237 258      JP-A- 2001 032 772
JP-A- 2002 277 082    JP-A- 2004 278 824
JP-A- 2012 067 954    JP-A- 2013 139 902
JP-A- 2016 090 143

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

[Technical Field]

The present invention relates to a heat pump apparatus and a method of controlling the same.

[Background Art]

For example, as disclosed in PTL 1, a multistage compression chilling system including a low stage compressor and a high stage compressor that performs two-stage compression is known. In the chilling system as above, the COP (coefficient of performance) is enhanced by performing equal pressure ratio control by causing pressure ratios of the low stage compressor and the high stage compressor to be equal. That is, in the equal pressure ratio control, an intermediate pressure that is a discharge pressure of the low stage compressor is controlled to be a geometric mean of the pressure of a suction refrigerant of the low stage compressor and a high pressure of a discharge refrigerant of the high stage compressor.

[Citation List]

[Patent Literature]

[PTL 1]
the Japanese Domestic Re-publication of PCT International Publication No. WO 2012/004987
EP 3 018 351 relates to an apparatus according to the preamble of claim 1 and to a method according to the preamble of claim 3.

[Summary of Invention]

[Technical Problem]

However, when the abovementioned chilling system is used as a heat pump apparatus, as the outside air temperature decreases in the winter, the refrigerant pressure in an outdoor heat exchanger also decreases. There is a risk that the refrigerant pressure in the outdoor heat exchanger becomes a negative pressure when the refrigerant pressure decreases. Therefore, low-pressure protection control is performed so as to avoid the pressure decrease by reducing the rotating speed of the low stage compressor and the high stage compressor. When the equal pressure ratio control prioritizing the enhancement of the COP is performed at this time, the high pressure also decreases. As a result, there is a problem in that the capacity of the heat pump apparatus cannot be maintained.
The present invention has been made in view of the situation as above, and an object thereof is to provide a heat pump apparatus capable of maintaining the output of the heat pump apparatus as much as possible without excessively reducing the pressure in an outdoor heat exchanger even when the outside air temperature is low, and a method of controlling the heat pump apparatus.

[Solution to Problem]

In order to solve the abovementioned problem, a heat pump apparatus and a method of controlling the heat pump apparatus of the present invention employ the following solutions.
That is, a heat pump apparatus according to an aspect of the present invention is defined by claim 1 and includes: a low stage compressor configured to compress a refrigerant from a low pressure to an intermediate pressure; a high stage compressor configured to compress the refrigerant compressed to the intermediate pressure to a high pressure; a user-side heat exchanger configured to cause the refrigerant compressed to the high pressure and a user-side heat medium to exchange heat; an expansion valve configured to expand the refrigerant guided from the user-side heat exchanger; an outdoor heat exchanger configured to evaporate the refrigerant expanded by the expansion valve; and a control unit configured to control a rotating speed of the high stage compressor so that the refrigerant is compressed to a target high pressure required in the user-side heat exchanger, and control a rotating speed of the low stage compressor so that a target intermediate pressure that is a geometric mean of the target high pressure and the low pressure is obtained. The control unit controls the rotating speed of the low stage compressor to decrease and controls the rotating speed of the high stage compressor to increase according to a decrease amount of the rotating speed of the low stage compressor when a refrigerant pressure in the outdoor heat exchanger is equal to or lower than a first threshold value.
In a chilling cycle that performs a two-stage compression in which the refrigerant is compressed from the low pressure to the intermediate pressure in the low stage compressor and then is compressed to the high pressure in the high stage compressor, it is preferred to control the intermediate pressure to be the geometric mean of the high pressure and the low pressure from the viewpoint of enhancing the COP. However, when the outside air temperature decreases and the refrigerant pressure in the outdoor heat exchanger decreases, there is a need to increase the rotating speed of the high stage compressor and the low stage compressor in order to secure a high-low pressure difference of the refrigerant, and there is a risk that a suction refrigerant pressure of the low stage compressor decreases and the refrigerant pressure of the outdoor heat exchanger decreases even more when the rotating speed of the low stage compressor is increased.
Therefore, when the refrigerant pressure of the outdoor heat exchanger becomes equal to or lower than a first threshold value, the decrease of the refrigerant pressure of the outdoor heat exchanger is suppressed by reducing the rotating speed of the low stage compressor. Meanwhile, the capacity-prioritized control that maintains the output of the heat pump apparatus as much as possible is performed by controlling the high stage compressor so that the rotating speed thereof increases according to the decrease amount of the rotating speed of the low stage compressor that has been reduced.

As a result of the above, the output of the heat pump apparatus can be maintained as much as possible without excessively reducing the refrigerant pressure of the outdoor heat exchanger even when the outside air temperature is low.

The first threshold value is a refrigerant pressure corresponding to a saturation temperature of from -15°C to - 8°C, for example.

Further, in the heat pump apparatus according to an aspect of the present invention, the control unit controls the rotating speed of the high stage compressor to decrease when the refrigerant pressure in the outdoor heat exchanger reaches a second threshold value lower than the first threshold value.

When the outside air temperature becomes lower than the first threshold value, the low pressure decreases even more, and hence the low-pressure protection control is performed by reducing the rotating speed of the high stage compressor. As a result, a case where the refrigerant pressure in the outdoor heat exchanger becomes a negative pressure can be avoided.

The second threshold value is a refrigerant pressure corresponding to a saturation temperature of from -20°C to - 14°C, for example.

In addition, in a method of controlling a heat pump apparatus according to an aspect of the present invention, the heat pump apparatus is defined by claim 3 and includes: a low stage compressor configured to compress a refrigerant from a low pressure to an intermediate pressure; a high stage compressor configured to compress the refrigerant compressed to the intermediate pressure to a high pressure; a user-side heat exchanger configured to cause the refrigerant compressed to the high pressure and a user-side heat medium to exchange heat; an expansion valve configured to expand the refrigerant guided from the user-side heat exchanger; and an outdoor heat exchanger configured to evaporate the refrigerant expanded by the expansion valve. The method includes: controlling a rotating speed of the high stage compressor so that the refrigerant is compressed to a target high pressure required in the user-side heat exchanger, and controlling a rotating speed of the low stage compressor so that a target intermediate pressure that is a geometric mean of the target high pressure and the low pressure is obtained; and controlling the rotating speed of the low stage compressor to decrease and controlling the rotating speed of the high stage compressor to increase according to a decrease amount of the rotating speed of the low stage compressor when a refrigerant pressure in the outdoor heat exchanger is equal to or lower than a first threshold value.

[Advantageous Effects of Invention]

The output of the heat pump apparatus can be maintained as much as possible without excessively reducing the pressure in the outdoor heat exchanger even when the outside air temperature is low.

[Brief Description of Drawings]

[Fig. 1] Fig. 1 is a schematic configuration diagram illustrating a heat pump apparatus according to an embodiment of the present invention.
[Fig. 2] Fig. 2 is a p-h diagram illustrating a heat pump cycle of the heat pump apparatus in Fig. 1.
[Fig. 3A] Fig. 3A is a graph illustrating a capacity-prioritized operation and a relationship of the rotating speed to the outside air temperature.
[Fig. 3B] Fig. 3B is a graph illustrating the capacity-prioritized operation and a relationship of the capacity to the outside air temperature.
[Fig. 4] Fig. 4 is a flowchart illustrating a method of controlling the heat pump apparatus in Fig. 1.
[Fig. 5] Fig. 5 is a flowchart illustrating the method of controlling the heat pump apparatus in Fig. 1.
[Fig. 6] Fig. 6 is a timing chart illustrating the switching of the operation state of the heat pump apparatus in Fig. 1.

[Description of Embodiments]

An embodiment according to the present invention is described below with reference to the drawings.

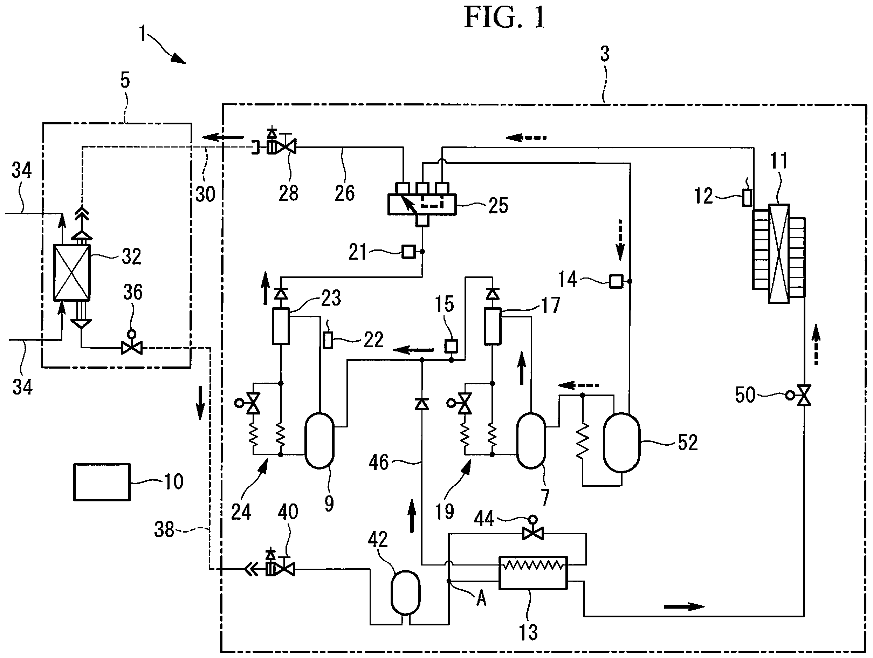

Fig. 1 illustrates a schematic configuration of a heat pump apparatus 1. Note that the heat pump apparatus 1 is described as a heat pump apparatus in this embodiment, but can also be used as an apparatus that performs a chilling cycle by switching a four-way valve 25.
The heat pump apparatus 1 includes a heat source unit 3 and a user-side heat exchanger unit 5.
The heat source unit 3 includes a low stage compressor 7, a high stage compressor 9, an outdoor heat exchanger 11, and a supercooling heat exchanger 13.
The low stage compressor 7 sucks a gas refrigerant having a suction pressure Ps that is set as a low pressure guided from an accumulator 52, and compresses the gas refrigerant to an intermediate pressure Pm. As the refrigerant, a low-pressure refrigerant such as an R134a or an R1234yf is used, for example. The low stage compressor 7 is a scroll compressor or a rotary compressor driven by an electric motor, and is configured so that the rotating speed thereof is controlled by a command from a control unit 10. The intermediate pressure Pm of the refrigerant discharged from the low stage compressor 7 is measured by an intermediate-pressure pressure sensor 15, and the output after the measurement is transmitted to the control unit 10.

The suction pressure Ps of the low stage compressor 7 is measured by a low-pressure pressure sensor 14 provided on the upstream side of the accumulator 52, and the output after the measurement is transmitted to the control unit 10. Note that the suction pressure Ps of the low stage compressor 7 may be calculated by the control unit 10 with use of a measurement value of an outdoor heat exchanger temperature sensor 12 mounted on the outdoor heat exchanger 11. Specifically, the output of the outdoor heat exchanger temperature sensor 12 is transmitted to the control unit 10, and the control unit 10 calculates a low pressure LP given that the measured temperature in the outdoor heat exchanger 11 is a refrigerant saturation temperature. Then, the low pressure LP is used as the suction pressure Ps.

The refrigerant discharged from the low stage compressor 7 passes through a low-stage oil separator 17 and oil accompanying the refrigerant is removed. Then, the refrigerant is guided to the high stage compressor 9. The oil separated by the low-stage oil separator 17 is returned to the low stage compressor 7 via a low-stage return flow path 19.

The high stage compressor 9 sucks the gas refrigerant having the intermediate pressure Pm guided from the low stage compressor 7, and compresses the gas refrigerant to a high pressure Pd. The high stage compressor 9 is a scroll compressor or a rotary compressor driven by an electric motor, and is configured so that the rotating speed thereof is controlled by a command from the control unit 10. The high pressure Pd of the refrigerant discharged from the high stage compressor 9 is measured by a high-pressure pressure sensor 21, and the output after the measurement is transmitted to the control unit 10. A high-stage discharge temperature sensor 22 that measures a discharge temperature Td of the refrigerant is provided on a discharge pipe of the high stage compressor 9. The output of the high-stage discharge temperature sensor 22 is transmitted to the control unit 10.

The refrigerant discharged from the high stage compressor 9 passes through a high-stage oil separator 23, and oil accompanying the refrigerant is removed. Then, the refrigerant is guided to the four-way valve 25. The oil separated by the high-stage oil separator 23 returns to the high stage compressor 9 via a low-stage return flow path 24.

The four-way valve 25 switches the flow path according to the heat pump operation or the chilling cycle operation by a command from the control unit 10. In this embodiment, the heat pump operation is described. Therefore, in the four-way valve 25, the flow path is selected so that a high-pressure refrigerant guided from the high stage compressor 9 is guided to a first refrigerant pipe 26 leading to the user-side heat exchanger unit 5.

A first connection pipe 30 is connected to the first refrigerant pipe 26 via a first operating valve 28. The high-pressure refrigerant guided from the first connection pipe 30 is guided to the user-side heat exchanger unit 5.

A user-side heat exchanger 32 is provided in the user-side heat exchanger unit 5. In the user-side heat exchanger 32, heat is exchanged between the high-pressure refrigerant and warm water (user-side heat medium). The warm water is guided to the user-side heat exchanger 32 by a warm water circulation pipe 34 leading from an external load (not shown).

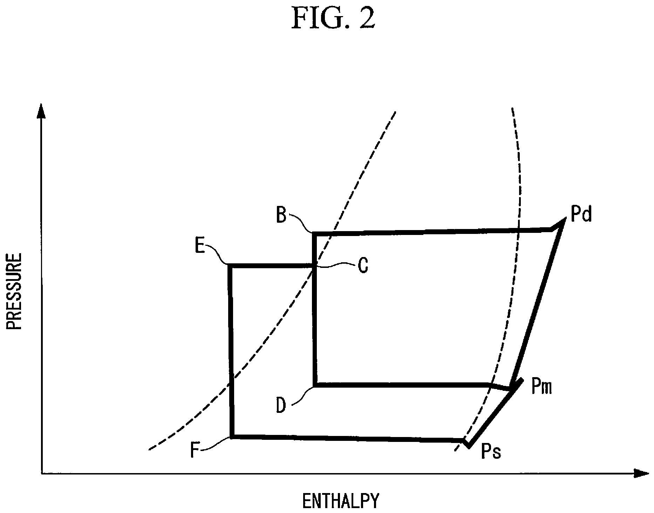

The refrigerant that has heated the warm water in the user-side heat exchanger 32 is condensed and liquefied, and is decompressed through a user-side expansion valve 36 (between point B and point C in Fig. 2). Then, the refrigerant is guided to the heat source unit 3 side via a second connection pipe 38.

The second connection pipe 38 is connected to a second operating valve 40. The refrigerant guided from the second operating valve 40 is transmitted to a receiver 42. In the receiver 42, gas and liquid of the refrigerant are separated from each other. The liquid refrigerant separated in the receiver 42 is guided to the supercooling heat exchanger 13. Meanwhile, a part of the liquid refrigerant that has branched off at a branch point A on the upstream side of the supercooling heat exchanger 13 is expanded by an expansion valve for supercooling 44, and is guided to the supercooling heat exchanger 13. Then, the part of the liquid refrigerant cools the liquid refrigerant guided to the supercooling heat exchanger 13 and applies supercooling to the liquid refrigerant. The refrigerant that has applied supercooling and has gasified is guided to the discharge side of the low stage compressor 7 and the suction side of the high stage compressor 9 via a gas injection pipe 46. The liquid refrigerant on which supercooling has been applied in the supercooling heat exchanger 13 is guided to an expansion valve 50.

The expansion valve 50 is opened at a predetermined opening degree by a command from the control unit 10, and expands the liquid refrigerant. The refrigerant of which pressure has become low by being expanded by the expansion valve 50 is transmitted to the outdoor heat exchanger 11, exchanges heat with the outside air, and is evaporated. The refrigerant that has evaporated and gasified in the outdoor heat exchanger 11 is guided to the accumulator 52 via the four-way valve 25. The refrigerant that has been temporarily accumulated in the accumulator 52 is guided to the low stage compressor 7.

The control unit 10 is formed by, for example, a CPU (Central Processing Unit), a RAM (Random Access Memory), a ROM (Read Only Memory), a computer-readable storage medium, and the like. In addition, a series of processing for realizing various functions is stored in the storage medium and the like in a format of a program, for example, and various functions are realized by reading out the program onto the RAM and the like by the CPU and executing processing and calculation of information. Note that a form in which the program is installed in the ROM or other storage medium in advance, a form in which the program is provided in a state of being stored in the computer-readable storage medium, a form in which the program is distributed via a communication means in a wired or wireless manner, and the like may be applied to the program. The computer-readable storage medium is a magnetic disk, a magneto-optical disk, a CD-ROM, a DVD-ROM, a semiconductor memory, and the like.

Fig. 2 illustrates a p (pressure)-h (enthalpy) diagram of a heat pump cycle performed by the heat pump apparatus 1 having the abovementioned configuration.

As illustrated in Fig. 2, the pressure of the refrigerant is boosted from the suction pressure Ps corresponding to the low pressure LP to the intermediate pressure Pm in the low stage compressor 7, and the pressure of the refrigerant is boosted from the intermediate pressure Pm to the high pressure Pd in the high stage compressor 9. The refrigerant of which pressure is boosted to the high pressure Pd is condensed and liquefied in the user-side heat exchanger 32 (point B). The heat of condensation at this time is applied to the warm water passing through the user-side heat exchanger 32, and the warm water is heated. The heating temperature of the warm water is set to be 60°C or more, for example, 80°C.

The liquid refrigerant that has been condensed in the user-side heat exchanger 32 is guided to the receiver 42 disposed in the heat source unit 3 (point C). In the receiver 42, gas and liquid are separated from each other, and a part of the liquid refrigerant is expanded by the expansion valve for supercooling 44 (point D) and is guided to the supercooling heat exchanger 13. In the supercooling heat exchanger 13, heat is exchanged between the refrigerant expanded by the expansion valve for supercooling 44 and the remaining liquid refrigerant that is not guided to the expansion valve for supercooling 44. As a result, supercooling is applied to the remaining liquid refrigerant (point E). The refrigerant that has applied supercooling to the remaining liquid refrigerant in the supercooling heat exchanger 13 becomes a gas refrigerant and is guided to the suction side of the high stage compressor 9.

The liquid refrigerant on which supercooling has been applied is expanded by the expansion valve 50 (point F) and is guided to the outdoor heat exchanger 11. In the outdoor heat exchanger 11, the liquid refrigerant is evaporated by exchanging heat with the outside air, and the gasified refrigerant is guided to the low stage compressor 7.

[COP-prioritized Operation]

The heat pump apparatus 1 performs COP-prioritized operation when the low pressure LP that is the refrigerant pressure in the outdoor heat exchanger 11 does not decrease to a first threshold value P1 described below. The COP-prioritized operation is considered to be the most efficient operation in the heat pump operation in which the two-stage compression is performed by the low stage compressor 7 and the high stage compressor 9. Specifically, equal pressure ratios in which the pressure ratios of the low stage compressor 7 and the high stage compressor are equal are provided, and are expressed by expression (1) below.

$$Pm/Ps=Pd/Pm \quad \cdots (1)$$

According to expression (1) above, the intermediate pressure Pm can be obtained as below.

$$Pm=(Ps \cdot Pd)^{1/2} \quad \cdots (2)$$

Therefore, in the COP-prioritized operation, the control unit 10 performs operation so that the intermediate pressure Pm is a geometric mean of the suction pressure Ps and the high pressure Pd.

The control unit 10 controls the rotating speed of the high stage compressor 9 so as to obtain the target high pressure Pd corresponding to a refrigerant saturation temperature (for example, a refrigerant saturation temperature of 82°C) with which a required temperature (for example, 80°C) of the warm water heated by the user-side heat exchanger 32 can be obtained. Specifically, the control unit 10 includes a map or a calculation formula indicating a relationship between the target high pressure Pd corresponding to the required temperature of the warm water and the rotating speed, and controls the rotating speed of the high stage compressor 9 on the basis of the map or the calculation formula.

In addition, the control unit 10 controls the rotating speed of the low stage compressor 7 so that the intermediate pressure Pm indicated in expression (2) above is obtained. At this time, the low pressure LP acquired by the low-pressure pressure sensor 14 is used as the suction pressure Ps and the measurement value of the high-pressure pressure sensor 21 is used as the high pressure Pd.

[Low Pressure Protection Control]

When the outside air temperature decreases in the winter, for example, the low pressure LP also decreases. There is a risk that the low pressure LP becomes a negative pressure when the low pressure LP decreases. Therefore, when the low pressure LP becomes equal to or lower than a second threshold value P2, protection control is performed so as to avoid the decrease of the low pressure by reducing the rotating speed of the low stage compressor 7 and the high stage compressor 9. Specifically, the control unit 10 reduces the rotating speed of the low stage compressor 7 and the high stage compressor 9 while maintaining equal pressure ratios as in the COP-prioritized operation. In that case, the rotating speed of the high stage compressor 9 also decreases, and hence the capacity of the heat pump decreases. The second threshold value is a refrigerant pressure corresponding to a saturation temperature of from -20°C to -14°C, for example.

[Capacity-prioritized Operation]

The capacity of the heat pump decreases when the low-pressure protection control is performed, and hence a capacity-prioritized operation that secures as much capacity as possible is performed until just before the low-pressure protection control is performed. Specifically, the first threshold value P1 is defined as a pressure higher than the second threshold value P2, and the capacity-prioritized operation is performed when the pressure becomes equal to or lower than the first threshold value P1 until the pressure falls below the second threshold value P2. The capacity-prioritized operation reduces the rotating speed of the low stage compressor 7 and increases the rotating speed of the high stage compressor 9 according to the decrease amount by a command from the control unit 10. The first threshold value is a refrigerant pressure corresponding to a saturation temperature of from -15°C to -8°C, for example.

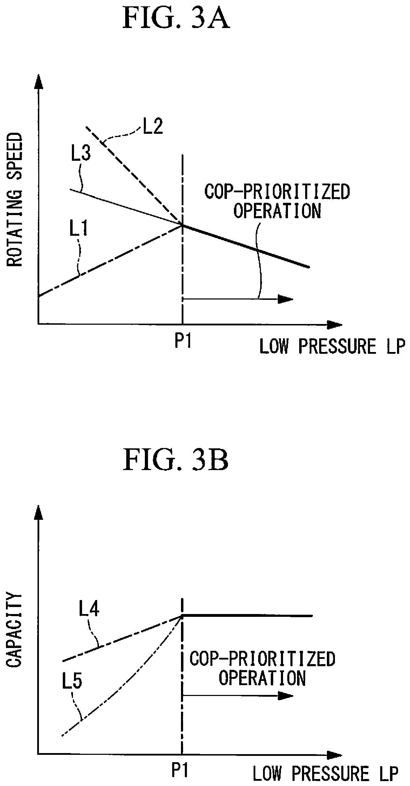

That is, as illustrated in Fig. 3A, even when the low pressure LP decreases due to the decrease of the outside air temperature, the COP-prioritized operation is performed with the equal pressure ratios until the first threshold value P1, and the rotating speed of the low stage compressor 7 and the high stage compressor 9 is increased according to the decrease of the outside air temperature. Then, when the low pressure LP becomes equal to or lower than the first threshold value P1, the operation becomes the capacity-prioritized operation and the rotating speed of the low stage compressor 7 is reduced according to the decrease of the low pressure LP as indicated by line L1. The rotating speed of the high stage compressor 9 is increased according to the decrease amount of the rotating speed of the low stage compressor 7 as indicated by line L2. Line L3 indicates a rotating speed when the equal pressure ratio operation is continued when the pressure is equal to or lower than the first threshold value P1.

Fig. 3B illustrates the capacity of the heat pump apparatus 1 according to the low pressure LP. As illustrated in Fig. 3B, when the low pressure LP becomes equal to or lower than the first threshold value P1, the rotating speed of the high stage compressor 9 increases but the capacity becomes lower than that in the COP-prioritized operation as indicated by line L4. However, when the low-pressure protection control is performed when the low pressure LP becomes equal to or lower than the first threshold value P1, the rotating speed of the low stage compressor 7 and the high stage compressor 9 both decrease, and hence the capacity becomes even lower than that in the capacity-prioritized operation as indicated by line L5.

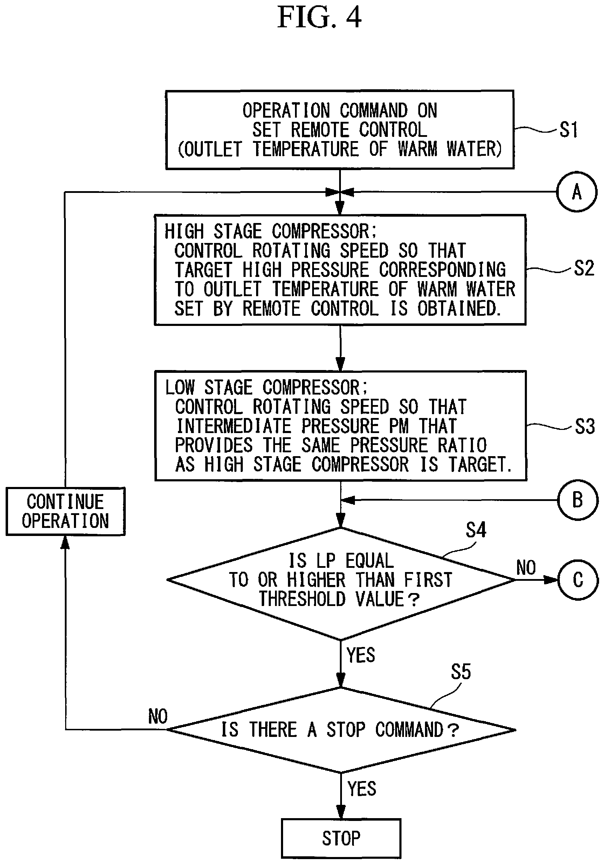

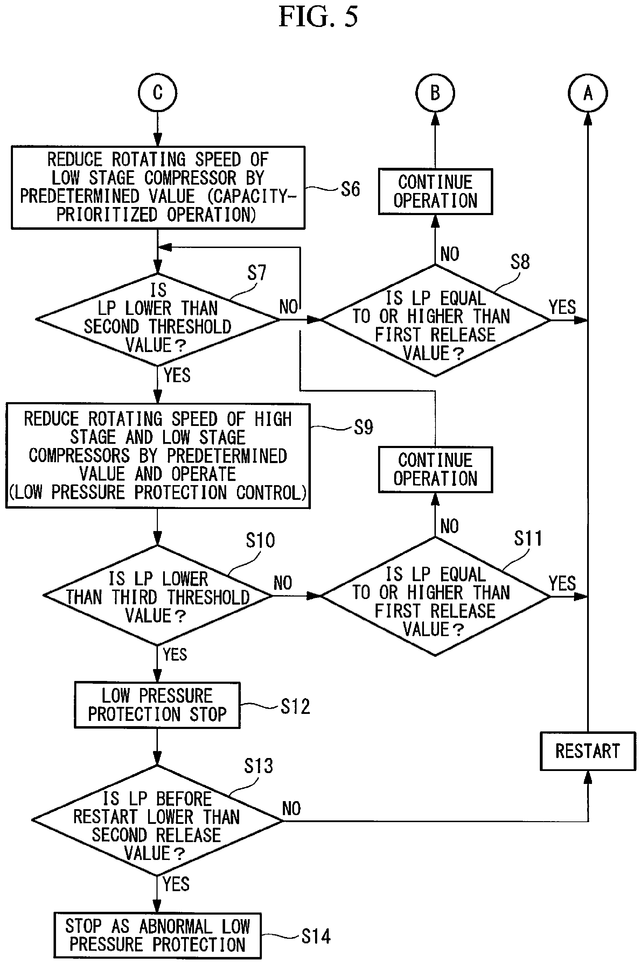

Next, an operation control method of the heat pump apparatus 1 is described with reference to Fig. 4 and Fig. 5.

First, in step S1, an operation command is turned ON, and an outlet temperature of the warm water on the user side is set by the setting of a remote control.

Then, in step S2, the rotating speed of the high stage compressor 9 is controlled so that the target high pressure Pd corresponding to the set outlet temperature of the warm water is obtained by a command from the control unit 10.

Then, in step S3, by a command from the control unit 10, as shown in expression (2), the rotating speed of the low stage compressor 7 is controlled so that the target intermediate pressure Pm that provides the same pressure ratio as the high stage compressor 9 is obtained. The COP-prioritized operation is performed by step S2 and step S3.

Then, in step S4, it is determined whether the low pressure LP is equal to or higher than the first threshold value P1. When the low pressure LP is equal to or higher than the first threshold value P1, the procedure proceeds to step S5 and determines whether there is a stop command for the heat pump apparatus 1. When there is a stop command, the operation of the heat pump apparatus 1 is stopped. When there is no stop command, it is determined that the operation is to be continued and the procedure returns to step S2.

When the low pressure LP falls below the first threshold value P1 in step S4, the procedure proceeds to step S6 and the rotating speed of the low stage compressor 7 is reduced by a predetermined amount. At this time, the high stage compressor 9 performs the capacity-prioritized operation so as to maintain the target high pressure Pd.

Then, in step S7, it is determined whether the low pressure LP is lower than the second threshold value P2. When the low pressure is equal to or higher than the second threshold value P2, the procedure proceeds to step S8 and determines whether the low pressure LP is equal to or higher than a first release value R1. When the low pressure LP is lower than the first release value R1, the procedure returns to step S4 and continues the operation. When the low pressure LP is equal to or higher than the first release value R1, the procedure returns to step S2 and continues the operation.

When the low pressure LP is lower than the second threshold value P2 in step S7, the procedure proceeds to step S9 and the low-pressure protection control is performed by reducing the rotating speed of the low stage compressor 7 and the high stage compressor 9.

Then, in step S10, it is determined whether the low pressure LP is lower than a third threshold value P3. When the low pressure LP is equal to or higher than the third threshold value P3, the procedure proceeds to step S11 and determines whether the low pressure LP is equal to or higher than the first release value R1. When the low pressure LP is lower than the first release value R1, the procedure proceeds to step S7 and continues the operation. When the low pressure LP is equal to or higher than the first release value R1, the procedure returns to step S2 and continues the operation. The third threshold value is a refrigerant pressure corresponding to a saturation temperature of from -26°C to -18°C, for example.

In step S10, when the low pressure LP is lower than the third threshold value P3, the procedure proceeds to step S12, stops the low-pressure protection, and stops the operation of the heat pump apparatus 1.

Then, in step S13, it is determined whether the low pressure LP is lower than a second release value R2. When the low pressure LP is equal to or higher than the second release value R2, restart is performed and the procedure returns to step S2. When the low pressure LP is lower than the second release value R2, the procedure proceeds to step S14 and a stopped state is maintained as abnormal low-pressure protection without performing restart.

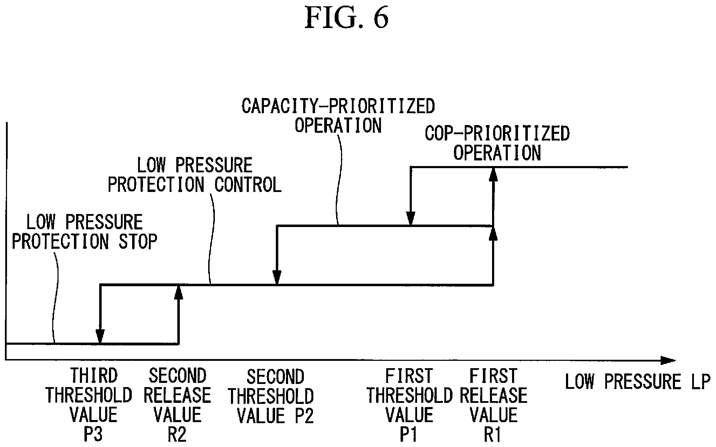

Fig. 6 illustrates a timing chart illustrating the timing of switching the operation state.

As illustrated in Fig. 6, the COP-prioritized operation switches to the capacity-prioritized operation when the low pressure LP falls below the first threshold value P1, the capacity-prioritized operation switches to the low-pressure protection control when the low pressure LP falls below the second threshold value P2, and the low-pressure protection control switches to the low-pressure protection stop when the low pressure LP falls below the third threshold value P3. In addition, the heat pump apparatus 1 is restarted and reset when the low pressure LP exceeds the second release value R2 that is a larger value than the third threshold value P3, and the heat pump apparatus 1 is reset to the COP-prioritized operation when the low pressure LP exceeds the first release value R1 larger than the first threshold value P1.

As described above, according to this embodiment, the following effects are exhibited.

In the chilling cycle that performs the two-stage compression in which the refrigerant is compressed from the suction pressure Ps to the intermediate pressure Pm in the low stage compressor 7 and then is compressed to the high pressure Pd in the high stage compressor 9, it is preferred to control the intermediate pressure Pm to be the geometric mean of the high pressure Pd and the suction pressure Ps that is a low pressure from the viewpoint of enhancing the COP. However, when the outside air temperature decreases and the low pressure LP that is the refrigerant pressure in the outdoor heat exchanger 11 decreases, there is a need to increase the rotating speed of the high stage compressor 9 and the low stage compressor 7 in order to secure a high-low pressure difference of the refrigerant, and there is a risk that the pressure Ps of the suction refrigerant of the low stage compressor 7 decreases and the low pressure LP decreases even more when the rotating speed of the low stage compressor 7 is increased.

Therefore, when the low pressure LP becomes equal to or lower than the first threshold value P1, the decrease of the low pressure LP is suppressed by reducing the rotating speed of the low stage compressor 7. Meanwhile, the capacity-prioritized control that maintains the output of the heat pump apparatus 1 as much as possible is performed by controlling the high stage compressor 9 so that the rotating speed thereof increases according to the decrease amount of the rotating speed of the low stage compressor 7 that has been reduced.

As a result of the above, the output of the heat pump apparatus can be maintained as much as possible without excessively reducing the low pressure LP even when the outside air temperature is low.

In particular, in this embodiment, a low-pressure refrigerant such as an R134a or an R1234yf is used, and hence there is a risk that the low pressure LP becomes a negative pressure as compared to refrigerants such as an R410A. Therefore, the capacity-prioritized operation of the present invention is effective. In addition, when the capacity-prioritized operation as in the present invention is used, it is advantageous in that a system using the R410A as a refrigerant can be used while replacing the refrigerant with a low-pressure refrigerant.

Note that, although the user-side heat exchanger 32 is used for heating the warm water in this embodiment, the user-side heat exchanger 32 only needs to heat the heat medium on the user side and may be used as an air heat exchanger that heats air and outputs warm air, for example.

[Reference Signs List]

| 1 | heat pump apparatus |
|---|---|
| 3 | heat source unit |
| 5 | user-side heat exchanger unit |
| 7 | low stage compressor |
| 9 | high stage compressor |
| 10 | control unit |
| 11 | outdoor heat exchanger |
| 12 | outdoor heat exchanger temperature sensor |
| 13 | supercooling heat exchanger |
| 14 | low-pressure pressure sensor |
| 15 | intermediate-pressure pressure sensor |
| 17 | low-stage oil separator |
| 19 | low-stage return flow path |
| 21 | high-pressure pressure sensor |
| 22 | high-stage discharge temperature sensor |
| 23 | high-stage oil separator |
| 24 | high-stage return flow path |
| 26 | first refrigerant pipe |
| 28 | first operating valve |
| 30 | first connection pipe |
| 32 | user-side heat exchanger |
| 34 | warm water circulation pipe |
| 36 | user-side expansion valve |
| 38 | second connection pipe |
| 40 | second operating valve |

| 42 | receiver |
|----|----------|
| 44 | expansion valve for supercooling |
| 46 | gas injection pipe |
| 50 | expansion valve |
| 52 | accumulator |
| LP | low pressure |
| Ps | suction pressure (low pressure) |
| Pm | intermediate pressure |
| Pd | high pressure |
| P1 | first threshold value |
| P2 | second threshold value |
| P3 | third threshold value |
| Td | discharge temperature |

**Claims**

1. A heat pump apparatus, comprising:

   a low stage compressor (7) configured to compress a refrigerant from a low pressure to an intermediate pressure;
   a high stage compressor (9) configured to compress the refrigerant compressed to the intermediate pressure to a high pressure;
   a user-side heat exchanger (5) configured to cause the refrigerant compressed to the high pressure and a user-side heat medium to exchange heat;
   an expansion valve (50) configured to expand the refrigerant guided from the user-side heat exchanger (5);
   an outdoor heat exchanger (11) configured to evaporate the refrigerant expanded by the expansion valve (50);
   a low-pressure pressure sensor (14)configured to measure the low pressure, an intermediate pressure pressure sensor (15) configured to measure the intermediate pressure and a high-pressure pressure sensor (21) configured to measure the high pressure, and
   a control unit (10) configured to control a rotating speed of the high stage compressor (9) so that the refrigerant is compressed to a target high pressure required in the user-side heat exchanger (5), and to control a rotating speed of the low stage compressor (7) so that a target intermediate pressure that is a geometric mean of the target high pressure and the low pressure is obtained,
   **characterized in that** the control unit (10) controls the rotating speed of the low stage compressor (7) to decrease and controls the rotating speed of the high stage compressor (9) to increase according to a decrease amount of the rotating speed of the low stage compressor (7) when a refrigerant pressure in the outdoor heat exchanger (11) is equal to or lower than a first threshold value.

2. The heat pump apparatus according to claim 1, wherein the control unit (10) controls the rotating speed of the high stage compressor (9) to decrease when the refrigerant pressure in the outdoor heat exchanger (11) reaches a second threshold value lower than the first threshold value.

3. A method of controlling a heat pump apparatus, the heat pump apparatus comprising:

   a low stage compressor (7) configured to compress a refrigerant from a low pressure to an intermediate pressure;
   a high stage compressor (9) configured to compress the refrigerant compressed to the intermediate pressure to a high pressure;
   a user-side heat exchanger (5) configured to cause the refrigerant compressed to the high pressure and a user-side heat medium to exchange heat;
   an expansion valve (50) configured to expand the refrigerant guided from the user-side heat exchanger (5); and
   an outdoor heat exchanger (11) configured to evaporate the refrigerant expanded by the expansion valve (50),
   a low-pressure pressure sensor (14)configured to measure the low pressure, an intermediate pressure pressure sensor (15) configured to measure the intermediate pressure and a high-pressure pressure sensor (21) configured to measure the high pressure,
   the method comprising:

   controlling a rotating speed of the high stage compressor (9) so that the refrigerant is compressed to a target high pressure required in the user-side heat exchanger (5), and controlling a rotating speed of the low stage compressor (7) so that a target intermediate pressure that is a geometric mean of the target high pressure and the low pressure is obtained;
   the method being **characterized in that** it comprises controlling the rotating speed of the low stage compressor (7) to decrease and controlling the rotating speed of the high stage compressor (9) to increase according to a decrease amount of the rotating speed of the low stage compressor (7) when a refrigerant pressure in the outdoor heat exchanger (11) is equal to or lower than a first threshold value.

**Patentansprüche**

1. Wärmepumpenvorrichtung, die Folgendes umfasst:

   einen niedrigstufigen Verdichter (7), der dazu ausgelegt ist, ein Kältemittel von einem niedrigen Druck auf einen Zwischendruck zu verdichten;
   einen hochstufigen Verdichter (9), der dazu ausgelegt ist, das auf den Zwischendruck verdichtete Kältemittel auf einen hohen Druck zu verdichten;
   einen benutzerseitigen Wärmetauscher (5), der dazu ausgelegt ist, das auf den hohen Druck verdichtete Kältemittel und ein benutzerseitiges Wärmemedium zu veranlassen, Wärme auszutauschen;
   ein Expansionsventil (50), das dazu ausgelegt ist, das vom benutzerseitigen Wärmetauscher (5) geführte Kältemittel auszudehnen;
   einen Außenwärmetauscher (11), der dazu ausgelegt ist, das vom Expansionsventil (50) ausgedehnte Kältemittel zu verdampfen;
   einen Niederdruckdrucksensor (14), der dazu ausgelegt ist, den niedrigen Druck zu messen, einen Zwischendruckdrucksensor (15), der dazu ausgelegt ist, den Zwischendruck zu messen, und einen Hochdruckdrucksensor (21), der dazu ausgelegt ist, den hohen Druck zu messen, und
   eine Steuereinheit (10), die dazu ausgelegt ist, eine Drehgeschwindigkeit des hochstufigen Verdichters (9) derart zu steuern, dass das Kältemittel auf einen hohen Solldruck verdichtet wird, der im benutzerseitigen Wärmetauscher (5) erforderlich ist, und eine Drehgeschwindigkeit des niedrigstufigen Verdichters (7) derart zu steuern, dass ein Sollzwischendruck, der ein geometrisches Mittel des hohen Solldrucks und des niedrigen Drucks ist, erhalten wird, **dadurch gekennzeichnet, dass** die Steuereinheit (10) die Drehgeschwindigkeit des niedrigstufigen Verdichters (7) steuert, um sie zu verringern, und die Drehgeschwindigkeit des hochstufigen Verdichters (9) steuert, um sie gemäß einem Verringerungsbetrag der Drehgeschwindigkeit des niedrigstufigen Verdichters (7) zu erhöhen, wenn ein Kältemitteldruck im Außenwärmetauscher (11) gleich oder niedriger ist als ein erster Schwellwert.

2. Wärmepumpenvorrichtung nach Anspruch 1, wobei die Steuereinheit (10) die Drehgeschwindigkeit des hochstufigen Verdichters (9) steuert, um sie zu verringern, wenn der Kältemitteldruck im Außenwärmetauscher (11) einen zweiten Schwellwert erreicht, der niedriger ist als der erste Schwellwert.

3. Verfahren zum Steuern einer Wärmepumpenvorrichtung, wobei die Wärmepumpenvorrichtung Folgendes umfasst:

   einen niedrigstufigen Verdichter (7), der dazu ausgelegt ist, ein Kältemittel von einem niedrigen Druck auf einen Zwischendruck zu verdichten;
   einen hochstufigen Verdichter (9), der dazu ausgelegt ist, das auf den Zwischendruck verdichtete Kältemittel auf einen hohen Druck zu verdichten;
   einen benutzerseitigen Wärmetauscher (5), der dazu ausgelegt ist, das auf den hohen Druck verdichtete Kältemittel und ein benutzerseitiges Wärmemedium zu veranlassen, Wärme auszutauschen;
   ein Expansionsventil (50), das dazu ausgelegt ist, das vom benutzerseitigen Wärmetauscher (5) geführte Kältemittel auszudehnen; und
   einen Außenwärmetauscher (11), der dazu ausgelegt ist, das vom Expansionsventil (50) ausgedehnte Kältemittel zu verdampfen,
   einen Niederdruckdrucksensor (14), der dazu ausgelegt ist, den niedrigen Druck zu messen, einen Zwischendruckdrucksensor (15), der dazu ausgelegt ist, den Zwischendruck zu messen, und einen Hochdruckdrucksensor (21), der dazu ausgelegt ist, den hohen Druck zu messen, wobei das Verfahren Folgendes umfasst:

   Steuern einer Drehgeschwindigkeit des hochstufigen Verdichters (9) derart, dass das Kältemittel auf einen hohen Solldruck verdichtet wird, der im benutzerseitigen Wärmetauscher (5) erforderlich ist, und Steuern einer Drehgeschwindigkeit des niedrigstufigen Verdichters (7) derart, dass ein Sollzwischendruck, der ein geometrisches Mittel des hohen Solldrucks und des niedrigen Drucks ist, erhalten wird;
   wobei das Verfahren **dadurch gekennzeichnet ist, dass** es das Steuern der Drehgeschwindigkeit des niedrigstufigen Verdichters (7), um sie zu verringern, und das Steuern der Drehgeschwindigkeit des hochstufigen Verdichters (9), um sie gemäß einem Verringerungsbetrag der Drehgeschwindigkeit des niedrigstufigen Verdichters (7) zu erhöhen, wenn ein Kältemitteldruck im Außenwärmetauscher (11) gleich oder niedriger ist als ein erster Schwellwert, umfasst.

**Revendications**

1. Appareil de pompe à chaleur comprenant :

un compresseur d'étage inférieur (7) configuré pour comprimer un réfrigérant d'une basse pression à une pression intermédiaire ;

un compresseur d'étage supérieur (9) configuré pour comprimer le réfrigérant comprimé à la pression intermédiaire à une pression élevée ;

un échangeur de chaleur du côté de l'utilisateur (5) configuré pour amener le réfrigérant comprimé à la pression élevée et un fluide caloporteur du côté de l'utilisateur à échanger de la chaleur ;

une valve d'expansion (50) configurée pour dilater le réfrigérant guidé à partir de l'échangeur de chaleur du côté de l'utilisateur (5) ;

un échangeur de chaleur extérieur (11) configuré pour faire évaporer le réfrigérant dilaté par la valve d'expansion (50) ;

un capteur de pression de basse pression (14) configuré pour mesurer la basse pression, un capteur de pression de pression intermédiaire (15) configuré pour mesurer la pression intermédiaire et un capteur de pression de haute pression (21) configuré pour mesurer la haute pression, et

une unité de commande (10) configurée pour commander une vitesse de rotation du compresseur d'étage supérieur (9) de sorte que le réfrigérant est comprimé à une haute pression cible requise dans l'échangeur de chaleur du côté de l'utilisateur (5), et pour commander une vitesse de rotation du compresseur d'étage inférieur (7) de sorte que l'on obtient une pression intermédiaire cible qui est une moyenne géométrique de la haute pression cible et de la basse pression,

**caractérisé en ce que** l'unité de commande (10) commande la vitesse de rotation du compresseur d'étage inférieur (7) pour qu'elle diminue et commande la vitesse de rotation du compresseur d'étage supérieur (9) pour qu'elle augmente selon une quantité de décroissance de la vitesse de rotation du compresseur d'étage inférieur (7) lorsqu'une pression de réfrigérant dans l'échangeur de chaleur extérieur (11) est égale ou inférieure à une première valeur de seuil.

2. Appareil de pompe à chaleur selon la revendication 1, dans lequel l'unité de commande (10) commande la vitesse de rotation du compresseur d'étage supérieur (9) pour qu'elle diminue lorsque la pression de réfrigérant dans l'échangeur de chaleur extérieur (11) atteint une seconde valeur de seuil inférieure à la première valeur de seuil.

3. Procédé pour commander un appareil de pompe à chaleur, l'appareil de pompe à chaleur comprenant :

un compresseur d'étage inférieur (7) configuré pour comprimer un réfrigérant d'une basse pression à une pression intermédiaire ;

un compresseur d'étage supérieur (9) configuré pour comprimer le réfrigérant comprimé à la pression intermédiaire à une haute pression ;

un échangeur de chaleur du côté de l'utilisateur (5) configuré pour amener le réfrigérant comprimé à la haute pression et un fluide caloporteur du côté de l'utilisateur à échanger de la chaleur ;

une valve d'expansion (50) configurée pour dilater le réfrigérant guidé à partir de l'échangeur de chaleur du côté de l'utilisateur (5) ; et

un échangeur de chaleur extérieur (11) configuré pour faire évaporer le réfrigérant dilaté par la valve d'expansion (50),

un capteur de pression de basse pression (14) configuré pour mesurer la basse pression, un capteur de pression de pression intermédiaire (15) configuré pour mesurer la pression intermédiaire et un capteur de pression de haute pression (21) configuré pour mesurer la haute pression,

le procédé comprenant :

commander une vitesse de rotation du compresseur d'étage supérieur (9) de sorte que le réfrigérant est comprimé à une haute pression cible requise dans l'échangeur de chaleur du côté de l'utilisateur (5), et commander une vitesse de rotation du compresseur d'étage inférieur (7) de sorte que l'on obtient une pression intermédiaire cible qui est une moyenne géométrique de la haute pression cible et de la basse pression ;

le procédé étant **caractérisé en ce qu'**il comprend de commander la vitesse de rotation du compresseur d'étage inférieur (7) pour qu'elle diminue et commander la vitesse de rotation du compresseur d'étage supérieur (9) pour qu'elle augmente selon une quantité de décroissance de la vitesse de rotation du compresseur d'étage inférieur (7) lorsqu'une pression de réfrigérant dans l'échangeur de chaleur extérieur (11) est égale ou inférieure à une première valeur de seuil.

FIG. 1

# FIG. 2

# FIG. 3A

# FIG. 3B

# FIG. 4

```
┌─────────────────────────────────────┐
│         OPERATION COMMAND ON         │
│           SET REMOTE CONTROL         │──── S1
│  (OUTLET TEMPERATURE OF WARM WATER)  │
└─────────────────────────────────────┘
                    │
                    ▼ ◄──────────────────── (A)
┌─────────────────────────────────────┐
│ HIGH STAGE COMPRESSOR;               │
│  CONTROL ROTATING SPEED SO THAT      │
│  TARGET HIGH PRESSURE CORRESPONDING  │──── S2
│  TO OUTLET TEMPERATURE OF WARM WATER │
│  SET BY REMOTE CONTROL IS OBTAINED.  │
└─────────────────────────────────────┘
                    │
                    ▼
┌─────────────────────────────────────┐
│ LOW STAGE COMPRESSOR;                │
│  CONTROL ROTATING SPEED SO THAT      │
│  INTERMEDIATE PRESSURE PM THAT       │──── S3
│  PROVIDES THE SAME PRESSURE RATIO    │
│  AS HIGH STAGE COMPRESSOR IS TARGET. │
└─────────────────────────────────────┘
                    │
┌───────────┐       ▼ ◄──────────────────── (B)
│ CONTINUE  │      S4
│ OPERATION │      ◇ IS LP EQUAL          NO
└───────────┘     ◇ TO OR HIGHER THAN FIRST ──── (C)
      ▲           ◇ THRESHOLD VALUE?
      │                 │
      │                 │ YES
      │                S5
      │  NO             ◇
      └───────── ◇ IS THERE A STOP COMMAND?
                        │
                        │ YES
                        ▼
                  ┌──────────┐
                  │   STOP   │
                  └──────────┘
```

# FIG. 5

# FIG. 6

**EP 3 453 986 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012004987 A
- EP 3018351 A